# EUROPEAN PATENT APPLICATION

(11) **EP 4 749 864 A1**
(43) Date of publication of application: **27.05.2026**
(21) Application number: 25215432.3
(22) Date of filing: 13.11.2025
(51) Int. Cl.: H02J 1/102, H02J 7/02, H02J 7/62

(54) **CHARGING SYSTEM**

(30) Priority: 22.11.2024 CN 202411689838
(71) Applicant: Huawei Digital Power Technologies Co., Ltd., Shenzhen, Guangdong 518043 (CN)
(72) Inventor: YANG, Jin, Shenzhen, 518043 (CN); LV, Zejie, Shenzhen, 518043 (CN)
(74) Representative: Isarpatent

(57) **Abstract**

This application provides a charging system, applied to the field of energy technologies, to more reliably remove, when a plurality of alternating current-direct current conversion circuits are connected in parallel to a direct current busbar, an alternating current-direct current conversion circuit whose output is short-circuited. The charging system includes at least two alternating current-direct current conversion circuits, at least two first fuse groups, at least one direct current-direct current conversion circuit, and an auxiliary fuse module. An input end of each alternating current-direct current conversion circuit is connected to an alternating current power supply, and an output end of each alternating current-direct current conversion circuit is connected to a positive direct current busbar and a negative direct current busbar through a corresponding first fuse group. An input end of each direct current-direct current conversion circuit is connected to the positive direct current busbar and the negative direct current busbar. The auxiliary fuse module is connected to the positive direct current busbar and the negative direct current busbar, and the auxiliary fuse module outputs an auxiliary fuse current when the output end of the alternating current-direct current conversion circuit is short-circuited, so that the alternating current-direct current conversion circuit is removed from the charging system.

## Description

### TECHNICAL FIELD

This application relates to the field of energy technologies, and in particular, to a charging system.

### BACKGROUND

With continuous development of new energy vehicles, charging stations are being deployed across wider areas. In a charging station of a split structure, a plurality of alternating current-direct current (alternating current-direct current, AC-DC) conversion circuits are usually connected in parallel to a direct current busbar, and a plurality of direct current-direct current (direct current-direct current, DC-DC) conversion circuits are usually connected in parallel to the direct current busbar. However, in the plurality of parallel-connected alternating current-direct current conversion circuits, when a fault occurs in an alternating current-direct current conversion circuit and results in a short circuit at an output end, output ends of the other parallel-connected alternating current-direct current conversion circuits are also short-circuited, which affects normal running of the charging station. To prevent the short circuit at the output end of the alternating current-direct current conversion circuit from affecting the other alternating current-direct current conversion circuits, a fuse may be disposed at an output end of each alternating current-direct current conversion circuit to disconnect the faulty alternating current-direct current conversion circuit from the direct current busbar. However, in medium- and low-power application scenarios, when there are a small quantity of parallel-connected alternating current-direct current conversion circuits, an alternating current-direct current conversion circuit whose output end is short-circuited fails to be interrupted. Therefore, a solution needs to be urgently provided to resolve the foregoing problem.

### SUMMARY

Embodiments of this application provide a charging system, to more reliably remove, when a plurality of alternating current-direct current conversion circuits are connected in parallel to a direct current busbar, an alternating current-direct current conversion circuit whose output end is short-circuited.

To achieve the foregoing objectives, embodiments of this application provide the following technical solutions.

According to a first aspect, a charging system is provided. The charging system includes at least two alternating current-direct current conversion circuits, at least two first fuse groups, at least one direct current-direct current conversion circuit, and an auxiliary fuse module. Each first fuse group includes two fuses, an input end of each alternating current-direct current conversion circuit is configured to connect to an alternating current power supply, a positive output end of each alternating current-direct current conversion circuit is connected to a positive direct current busbar through one fuse in a corresponding first fuse group, and a negative output end of each alternating current-direct current conversion circuit is connected to a negative direct current busbar through the other fuse in the corresponding first fuse group. A positive input end of the direct current-direct current conversion circuit is connected to the positive direct current busbar, and a negative input end of the direct current-direct current conversion circuit is connected to the negative direct current busbar. A positive electrode of the auxiliary fuse module is connected to the positive direct current busbar, a negative electrode of the auxiliary fuse module is connected to the negative direct current busbar, the auxiliary fuse module is configured to output an auxiliary fuse current when an output end of the alternating current-direct current conversion circuit is short-circuited, and the auxiliary fuse current is greater than or equal to a short circuit current of the output end of the alternating current-direct current conversion circuit.

When an alternating current-direct current conversion circuit is normal while an output end of another alternating current-direct current conversion circuit is short-circuited, the normal alternating current-direct current conversion circuit forms a closed loop with the positive direct current busbar, the negative direct current busbar, and two fuses of the alternating current-direct current conversion circuit whose output end is short-circuited. However, when there are two alternating current-direct current conversion circuits, an output current of the normal alternating current-direct current conversion circuit is far less than a fuse current of the fuses, preventing the fuses from melting. This affects running of the normal alternating current-direct current conversion circuit. In this case, by using the auxiliary fuse current output by the auxiliary fuse module, a current flowing through the fuses is greater than the fuse current of the fuses, so that the alternating current-direct current conversion circuit whose output end is short-circuited is removed more reliably. In addition, when there are more than two alternating current-direct current conversion circuits, the auxiliary fuse current output by the auxiliary fuse module can also enable the alternating current-direct current conversion circuit whose output end is short-circuited to be removed from the charging system more quickly.

In an implementation, the auxiliary fuse module includes a first capacitor, a second capacitor, a first voltage equalizing resistor, and a second voltage equalizing resistor, the first capacitor and the second capacitor are connected in series between the positive electrode of the auxiliary fuse module and the negative electrode of the auxiliary fuse module, the first voltage equalizing resistor is connected in parallel to the first capacitor, and the second voltage equalizing resistor is connected in parallel to the second capacitor.

In the foregoing manner, two low-voltage withstand capacitors may be connected in series for energy storage, and voltages at two ends of the first capacitor and voltages at two ends of the second capacitor are dynamically balanced through the first voltage equalizing resistor and the second voltage equalizing resistor. In view of this, when the output end of the alternating current-direct current conversion circuit is short-circuited, the auxiliary fuse module can output the auxiliary fuse current, and avoid damage to the capacitors.

In an implementation, the auxiliary fuse module includes a supercapacitor, one end of the supercapacitor is connected to the positive electrode of the auxiliary fuse module, and the other end of the supercapacitor is connected to the negative electrode of the auxiliary fuse module. An energy storage circuit uses the supercapacitor for energy storage, which reduces use of the voltage equalizing resistors.

In an implementation, the auxiliary fuse module further includes a second fuse group, and the second fuse group includes two fuses. The positive electrode of the auxiliary fuse module is connected to the positive direct current busbar through one fuse in the second fuse group, and the negative electrode of the auxiliary fuse module is connected to the negative direct current busbar through the other fuse in the second fuse group.

By using the second fuse group, when a short circuit fault occurs on the positive and negative electrodes of the auxiliary fuse module, melting of the two fuses in the second fuse group can be implemented by using the output current of the normal alternating current-direct current conversion circuit, so that the auxiliary fuse module is removed.

In an implementation, the second fuse group and the first fuse group are fuse groups of a same specification. In view of this, more reliable melting of the fuses can be ensured when the positive and negative electrodes of the auxiliary fuse module are short-circuited or the output end of the alternating current-direct current conversion circuit is short-circuited.

In an implementation, the charging system further includes a bidirectional direct current-direct current conversion circuit and an energy storage battery, and the energy storage battery is connected to the positive direct current busbar and the negative direct current busbar through the bidirectional direct current-direct current conversion circuit.

In the foregoing manner, when the charging system of a charging station includes direct current stacked storage including the bidirectional direct current-direct current conversion circuit and the energy storage battery, the alternating current-direct current conversion circuit whose output end is short-circuited can also be removed.

In an implementation, the charging system further includes a third fuse group, the third fuse group includes two fuses, the bidirectional direct current-direct current conversion circuit is connected to the positive direct current busbar through one fuse in the third fuse group, and the bidirectional direct current-direct current conversion circuit is connected to the negative direct current busbar through the other fuse in the third fuse group.

In the foregoing manner, when a short circuit fault occurs at one end that is of the bidirectional direct current-direct current conversion circuit and that is connected to the direct current busbar, more reliable melting of the third fuse group can also be ensured by using the auxiliary fuse current output by the auxiliary fuse module.

In an implementation, the charging system further includes at least one fourth fuse group, the at least one fourth fuse group is connected to the at least one direct current-direct current conversion circuit in a one-to-one correspondence, each fourth fuse group further two fuses, a positive input end of each direct current-direct current conversion circuit is connected to the positive direct current busbar through one fuse in a corresponding fourth fuse group, and a negative input end of each direct current-direct current conversion circuit is connected to the negative direct current busbar through the other fuse in the corresponding fourth fuse group.

In the foregoing manner, when the input end of the direct current-direct current conversion circuit is short-circuited, more reliable melting of the fourth fuse group can also be ensured by using the auxiliary fuse current output by the auxiliary fuse module.

In an implementation, an operating Joule-integral value of the fuses in the fourth fuse group is less than a pre-arcing Joule integral value of the fuses in the first fuse group.

Fuses whose operating Joule-integral value is less than the pre-arcing Joule integral value of the fuses in the first fuse group are selected to form the fourth fuse group of a direct current-direct current conversion circuit, so that when a fault occurs in a direct current-direct current conversion circuit, only a fuse group corresponding to the direct current-direct current conversion circuit melts, and fuses corresponding to an alternating current-direct current conversion circuit is not affected, thereby ensuring stability of parallel protection for the alternating current-direct current conversion circuits.

In an implementation, in a working condition in which a quantity of the alternating current-direct current conversion circuits is greater than or equal to 3, the pre-arcing Joule integral value of the fuses in the first fuse group is greater than a quarter of an operating Joule-integral value of the fuses in the first fuse group.

Fuses whose pre-arcing Joule integral value is greater than the quarter of the operating Joule-integral value are selected to form the first fuse group of the alternating current-direct current conversion circuit, so that when a fault occurs in an alternating current-direct current conversion circuit, only a fuse group corresponding to the alternating current-direct current conversion circuit melts, and normal working of a fuse group corresponding to another alternating current-direct current conversion circuit is not affected, thereby ensuring stability of parallel protection for the alternating current-direct current conversion circuits.

### BRIEF DESCRIPTION OF DRAWINGS

FIG. 1 is a diagram of a structure of a charging system according to an embodiment of this application;
FIG. 2 is a diagram of another structure of a charging system according to an embodiment of this application;
FIG. 3 is a diagram of another structure of a charging system according to an embodiment of this application; and
FIG. 4 is a diagram of another structure of a charging system according to an embodiment of this application.

### DESCRIPTION OF EMBODIMENTS

It should be noted that in this application, the term such as "in an embodiment" or "for example" is used to represent giving an example, an illustration, or a description. Any embodiment or design scheme described as "in an embodiment" or "for example" in this application should not be explained as being more preferred or having more advantages than another embodiment or design scheme. Exactly, use of the term such as "in an embodiment" or "for example" is intended to present a related concept in a specific manner.

The following describes technical solutions of this application with reference to accompanying drawings.

With development of the electric vehicle industry, charging stations are being increasingly widely applied. A high charging speed of an electric vehicle, low operating costs of a charging pile in a charging station, and good charging experience are development trends of the charging industry. To improve power utilization of a charging system, some alternating current-direct current conversion circuits are usually connected in parallel with busbar energy pooling implemented. However, the following problem exists in parallel protection for a plurality of non-isolated alternating current-direct current conversion circuits: When the plurality of alternating current-direct current conversion circuits are connected in parallel, if a fault occurs in an alternating current-direct current conversion circuit, and results in a short circuit at an output end, output ends of the other parallel-connected alternating current-direct current conversion circuits are also short-circuited, which easily causes fault propagation.

Therefore, when there are the plurality of parallel-connected non-isolated alternating current-direct current conversion circuits in the charging system, short circuit protection needs to be performed on each alternating current-direct current conversion circuit, to prevent normal use of the other alternating current-direct current conversion circuits from being affected when a fault occurs in any alternating current-direct current conversion circuit in the charging system. In addition, a power conversion system (power conversion system, PCS) in the photovoltaic industry has functions of converting an alternating current into a direct current and converting a direct current into an alternating current. When the power conversion system includes a plurality of parallel-connected non-isolated alternating current-direct current conversion circuits, a same problem is also faced.

In order to resolve the foregoing problem, a method of disposing a switching transistor between each alternating current-direct current conversion circuit and a positive direct current busbar and a negative direct current busbar is usually used. The switching transistor is usually a semiconductor switching device, for example, an insulate-gate bipolar transistor (insulate-gate bipolar transistor, IGBT) or a metal-oxide-semiconductor field-effect transistor (metal-oxide-semiconductor field-effect transistor, MOSFET).

Specifically, after an output end short circuit or a protecting earthing (protecting earthing, PE) short circuit occurs in any alternating current-direct current conversion circuit in the charging system, if a current flowing through a switching transistor is large, or if a voltage at two ends of a switching transistor is higher than a set threshold when the switching transistor is turned on, protection is triggered, to disconnect the switching transistor. In this way, the alternating current-direct current conversion circuit whose output end is short-circuited is removed from the charging system, thereby avoiding damage to the other alternating current-direct current conversion circuits.

However, the switching transistor such as the IGBT used in the foregoing method has high costs, which is not conducive to cost control of the charging system. In addition, the switching transistor such as the IGBT or the MOS transistor has a high impedance, causing a relatively high power loss in an actual use process. As a result, charging efficiency is reduced, and consequently the switching transistor is not applicable to the charging pile industry that has an excessively high requirement on charging efficiency.

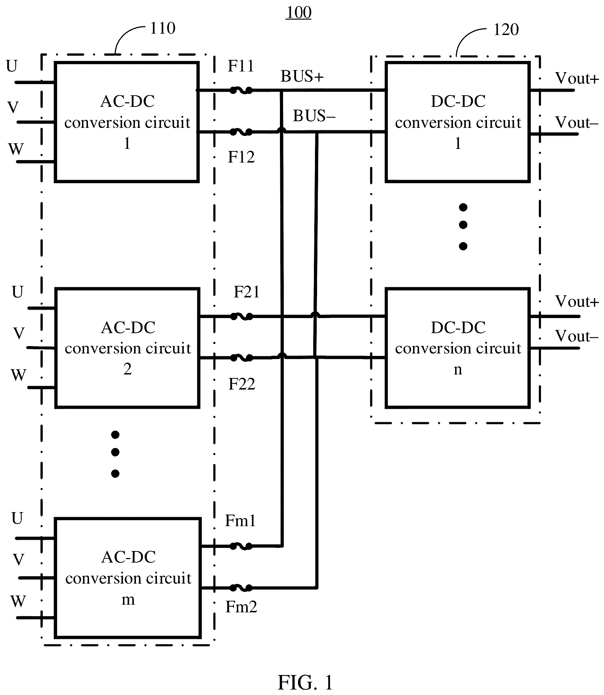

FIG. 1 is a diagram of a structure of a charging system according to an embodiment of this application. In some related technologies, as shown in FIG. 1, the charging system 100 includes m alternating current-direct current (alternating current-direct current, AC-DC) conversion circuits 110 (such as an AC-DC conversion circuit 1 to an AC-DC conversion circuit m in FIG. 1) and n direct current-direct current (direct current-direct current, DC-DC) conversion circuits 120 (such as a DC-DC conversion circuit 1 to a DC-DC conversion circuit n in FIG. 1), where m is an integer greater than or equal to 3, and n is an integer greater than or equal to 1. An input end of each alternating current-direct current conversion circuit 110 is connected to an alternating current power supply through three-phase connection terminals (such as U, V, and W in FIG. 1), and a positive output end and a negative output end of each alternating current-direct current conversion circuit 110 are connected to a positive direct current busbar and a negative direct current busbar through a fuse group. A positive input end of each direct current-direct current conversion circuit 120 is connected to the positive direct current busbar BUS+, and a negative input end of each direct current-direct current conversion circuit 120 is connected to the negative direct current busbar BUS-. A positive output end Vout+ and a negative output end Vout- of each direct current-direct current conversion circuit 120 are configured to connect to a power consuming device.

Still as shown in FIG. 1, a positive output end of the AC-DC conversion circuit 1 is connected to the positive direct current busbar BUS+ through a fuse F11, and a negative output end of the AC-DC conversion circuit 1 is connected to the negative direct current busbar BUS- through a fuse F12; and a positive output end of the AC-DC conversion circuit 2 is connected to the positive direct current busbar BUS+ through a fuse F21, and a negative output end of the AC-DC conversion circuit 2 is connected to the negative direct current busbar BUS- through a fuse F22. By analogy, a positive output end of the AC-DC conversion circuit m is connected to the positive direct current busbar BUS+ through a fuse Fm1, and a negative output end of the AC-DC conversion circuit m is connected to the negative direct current busbar BUS- through a fuse Fm2. The fuse F11 and the fuse F12 form a fuse group, the fuse F21 and the fuse F22 form a fuse group, ..., and the fuse Fm1 and the fuse Fm2 form a fuse group.

When an output end of an AC-DC conversion circuit is short-circuited, currents flowing through the fuses F11, F21, ..., and Fm1 are respectively I₁, I₂, ..., and Iₘ₁. When an output end of the AC-DC conversion circuit 1 is short-circuited, an output current of the AC-DC conversion circuit 2 is output from a positive electrode, and then flows back to a negative electrode of the AC-DC conversion circuit 2 through the fuse F21, the positive direct current busbar BUS+, the fuse F11, the fuse F12, and the fuse F22; and an output current of the AC-DC conversion circuit m is output from a positive electrode, and then flows back to a negative electrode of the AC-DC conversion circuit m through the fuse Fm1, the positive direct current busbar BUS+, the fuse F11, the fuse F12, and the fuse Fm2, so that a total current flowing through the fuse F11 and the fuse F12 is Iₙ=I₂+...+Iₘ₁. Short circuit currents of all the AC-DC conversion circuits are approximately equal, and are set to I₀. Therefore, the total current flowing through the fuse F11 and the fuse F12 is (m-1)I₀, and a current flowing through the fuse F21 and a current flowing through the fuse Fm1 are both I₀. When a Joule integral value of the fuse F11 and the fuse F12 is greater than an operating Joule-integral value, the fuses melt. When the output end of the AC-DC conversion circuit 1 is short-circuited, (m-1)²I₀₂t is greater than the operating Joule-integral value of the fuse F11 and the fuse F12, so that the fuse F11 and the fuse F12 melt. An AC-DC conversion circuit 1 is removed from the charging system, so that the other fuses can run normally. An operating Joule-integral value represents a total Joule integral before complete interruption of a fuse.

In the foregoing manner, when an output end of an alternating current-direct current conversion circuit 110 is short-circuited, the corresponding alternating current-direct current conversion circuit 110 can be removed in a timely manner. However, in the foregoing solution, at least three alternating current-direct current conversion circuits 110 need to be disposed. In medium- and low-power scenarios, this configuration constrains a power coverage range of a charging host, thereby limiting a product application scope.

In an embodiment, a positive input end and a negative input end of each direct current-direct current conversion circuit 120 are respectively connected to the positive direct current busbar BUS+ and the negative direct current busbar BUS- through another fuse group, and each fuse group includes two fuses. In view of this, when an input end of a direct current-direct current conversion circuit 120 is short-circuited, the corresponding direct current-direct current conversion circuit 120 can also be removed in a timely manner.

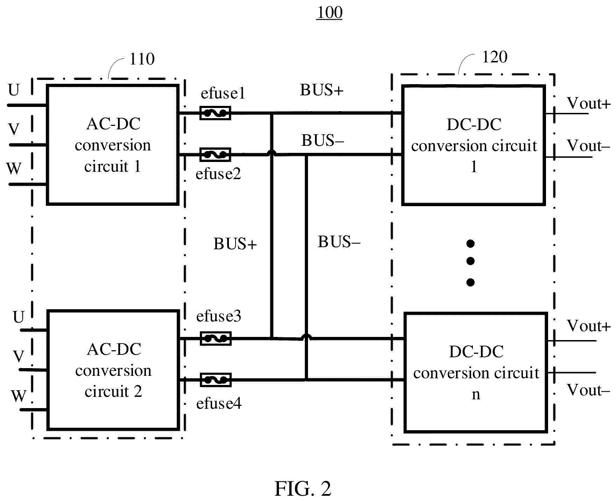

FIG. 2 is a diagram of another structure of a charging system according to an embodiment of this application. In some related technologies, in a scenario in which a charging requirement power is relatively small, the charging system 100 may include two alternating current-direct current conversion circuits 110 (such as an AC-DC conversion circuit 1 and an AC-DC conversion circuit 2 in FIG. 2) and n direct current-direct current conversion circuits 120 (such as a DC-DC conversion circuit 1 to a DC-DC conversion circuit n in FIG. 2). An input end of the AC-DC conversion circuit 1 is connected to an alternating current power supply through three-phase connection terminals (such as U, V, and W in FIG. 2), a positive output end of the AC-DC conversion circuit 1 is connected to a positive direct current busbar BUS+ through an electronic fuse efuse1, and a negative output end of the AC-DC conversion circuit 1 is connected to a negative direct current busbar BUS- through an electronic fuse efuse2. A positive output end of the AC-DC conversion circuit 2 is connected to the positive direct current busbar BUS+ through an electronic fuse efuse3, and a negative output end of the AC-DC conversion circuit 2 is connected to the negative direct current busbar BUS- through an electronic fuse efuse4. The DC-DC conversion circuit 1 to the DC-DC conversion circuit n are connected in parallel to the negative direct current busbar BUS- and the positive direct current busbar BUS+.

When an output end of an alternating current-direct current conversion circuit 110 is short-circuited, the alternating current-direct current conversion circuit 110 can be removed in a timely manner through a disposed electronic fuse. However, the electronic fuse is usually implemented through an integrated circuit, resulting in high costs and a large amount of heat consumption, which severely affects efficiency of a charging host.

To better resolve the foregoing problem, an embodiment of this application provides a charging system 100. The charging system 100 includes at least two alternating current-direct current conversion circuits 110, at least two first fuse groups, at least one direct current-direct current conversion circuit 120, and an auxiliary fuse module 130. Each first fuse group includes two fuses. An input end of each alternating current-direct current conversion circuit 110 is connected to an alternating current power supply through three-phase connection terminals (U, V, and W), a positive output end of each alternating current-direct current conversion circuit 110 is connected to a positive direct current busbar BUS+ through one fuse in a corresponding first fuse group, and a negative output end of each alternating current-direct current conversion circuit 110 is connected to a negative direct current busbar BUS- through the other fuse in the corresponding first fuse group. A positive input end of each direct current-direct current conversion circuit 120 is connected to the positive direct current busbar BUS+, and a negative input end of each direct current-direct current conversion circuit 120 is connected to the negative direct current busbar BUS-. A positive electrode of the auxiliary fuse module 130 is connected to the positive direct current busbar BUS+, a negative electrode of the auxiliary fuse module 130 is connected to the negative direct current busbar BUS-, the auxiliary fuse module 130 is configured to output an auxiliary fuse current when an output end of at least one alternating current-direct current conversion circuit 110 is short-circuited, and the auxiliary fuse current is greater than or equal to a short circuit current of the output end of the alternating current-direct current conversion circuit 110.

In the foregoing manner, output ends of the plurality of alternating current-direct current conversion circuits 110 are connected in parallel to the positive direct current busbar BUS+ and the negative direct current busbar BUS-, to implement busbar energy pooling.

A specific topology of the alternating current-direct current conversion circuit 110 in this embodiment of this application is not limited, provided that the alternating current-direct current conversion circuit 110 can implement a function of conversion between an alternating current and a direct current and a boost function of increasing an input voltage. For example, the alternating current-direct current conversion circuit 110 has a Vienna topology.

Further, a quantity of the alternating current-direct current conversion circuits 110 and a quantity of the direct current-direct current conversion circuits 120 that are included in the charging system 100 in this embodiment of this application are not specifically limited. The quantity of the alternating current-direct current conversion circuits 110 may be greater than the quantity of the direct current-direct current conversion circuits 120, or may be less than the quantity of the direct current-direct current conversion circuits 120. To be specific, one alternating current-direct current conversion circuit 110 may correspond to one or more direct current-direct current conversion circuits 120, or one direct current-direct current conversion circuit 120 may correspond to one or more alternating current-direct current conversion circuits 110. This is not limited in this embodiment of this application. The following uses a scenario in which the charging system 100 includes two alternating current-direct current conversion circuits 110 and two direct current-direct current conversion circuits 120 as an example for description.

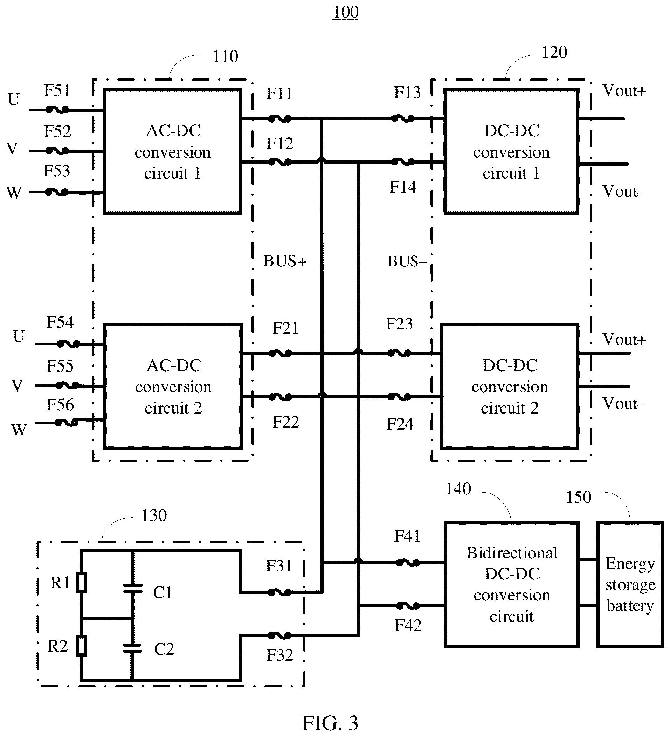

FIG. 3 is a diagram of another structure of a charging system according to an embodiment of this application. In an embodiment, as shown in FIG. 3, the charging system 100 includes an AC-DC conversion circuit 1, an AC-DC conversion circuit 2, a DC-DC conversion circuit 1, a DC-DC conversion circuit 2, and an auxiliary fuse module 130. A positive output end of the AC-DC conversion circuit 1 is connected to a positive direct current busbar BUS+ through a fuse F11, and a negative output end of the AC-DC conversion circuit 1 is connected to a negative direct current busbar BUS- through a fuse F12. The fuse F11 and the fuse F12 form a first fuse group corresponding to the AC-DC conversion circuit 1.

A positive output end of the AC-DC conversion circuit 2 is connected to the positive direct current busbar BUS+ through a fuse F21, and a negative output end of the AC-DC conversion circuit 2 is connected to the negative direct current busbar BUS- through a fuse F22. The fuse F21 and the fuse F22 form a first fuse group corresponding to the AC-DC conversion circuit 2.

A positive input end of the DC-DC conversion circuit 1 is connected to the positive direct current busbar BUS+, and a negative input end of the DC-DC conversion circuit 1 is connected to the negative direct current busbar BUS-. A positive output end Vout+ and a negative output end Vout- of the DC-DC conversion circuit 1 are configured to connect to a power consuming device. A positive input end of the DC-DC conversion circuit 2 is connected to the positive direct current busbar BUS+, and a negative input end of the DC-DC conversion circuit 2 is connected to the negative direct current busbar BUS-. A positive output end Vout+ and a negative output end Vout- of the DC-DC conversion circuit 2 are configured to connect to a power consuming device.

A positive electrode of the auxiliary fuse module 130 is connected to the positive direct current busbar BUS+, and a negative electrode of the auxiliary fuse module 130 is connected to the negative direct current busbar BUS-. The auxiliary fuse module 130 is configured to output an auxiliary fuse current when an output end of the AC-DC conversion circuit 1 or the AC-DC conversion circuit 2 is short-circuited. The auxiliary fuse current is greater than or equal to short circuit currents at the output ends of the AC-DC conversion circuit 1 and the AC-DC conversion circuit 2.

In an embodiment, when the output end of the AC-DC conversion circuit 1 is short-circuited, an output current I₂ of the AC-DC conversion circuit 2 is output from a positive electrode of the AC-DC conversion circuit 2, and then flows back to a negative electrode of the AC-DC conversion circuit 2 sequentially through the fuse F21, the positive direct current busbar BUS+, the fuse F11, the fuse F12, the negative direct current busbar BUS-, and the fuse F22; and the auxiliary fuse current I₃ output by the auxiliary fuse module 130 is output from the positive electrode, and then flows back to the negative electrode of the auxiliary fuse module 130 sequentially through the positive direct current busbar BUS+, the fuse F11, the fuse F12, and the negative direct current busbar BUS-, so that a total current flowing through the fuse F11 and the fuse F12 is I₂+I₃.

The AC-DC conversion circuit 1 and the AC-DC conversion circuit 2 are usually circuits of a same specification. Therefore, when an output end of an AC-DC conversion circuit is short-circuited due to a fault of another module, the short circuit current of the output end of the AC-DC conversion circuit 1 is I₁, and the current I₁ is approximately the same as the short circuit current I₂ of the output end of the AC-DC conversion circuit 2, where the short circuit current I₁ and the short circuit current I₂ are both set to I₀. When no auxiliary fuse module 130 exists, a current of the fuse F11 and a fuse current of the fuse F12 are both I₀. When the auxiliary fuse module 130 exists, when the auxiliary fuse current I₃ is greater than or equal to the short circuit current (namely, the current I₀) of the output end of the AC-DC conversion circuit 1, the total current I₂+I₃ flowing through the fuse F11 and the fuse F12 is greater than or equal to a fuse current, so that the fuse F11 and the fuse F12 meet a melting condition and can melt.

In an embodiment, the auxiliary fuse current I₃ is equal to the short circuit current of the output end of the AC-DC conversion circuit 1. In this case, when the output end of the AC-DC conversion circuit 1 is short-circuited, the current flowing through the fuses F11 and F12 is I₂+I₃=2I₀, that is, an operating Joule-integral value is W_{B}=4I₀₂t. In this case, Joule integral value of the fuse F21 and the fuse F31 is W₃=I₀₂t. When a pre-arcing Joule integral value of the fuses is greater than a quarter of the operating Joule-integral value, the fuses F11 and F12 meet a melting condition, and the fuse F21 and the fuse F31 are not affected. A pre-arcing Joule integral value represents a Joule integral value of a fuse before a fusible element melts.

In view of this, to ensure normal running of the fuse F21 and the fuse F31, W₃ shall be less than a pre-arcing Joule integral value W_{A} of the fuses. The pre-arcing Joule integral W_{A} is a Joule integral of a short circuit current absorbed by the fuse before arcing. Duration from melting initiation of a fuse to complete interruption of the fuse is arc time. A current in a short circuit loop gradually decreases to zero during the arcing time. A sum of pre-arcing time and the arcing time is total breaking time of the entire loop, namely, duration from short circuit initiation to complete interruption of the fuse.

Further, because fuses in a same fuse group have a same specification, the pre-arcing Joule integral value W_{A} of the fuse F11 and the fuse F12 shall be greater than a quarter of the operating Joule-integral value W_{B} of the fuse F11 and the fuse F12.

In addition, a material and a size of a fuse are not limited in this embodiment of this application, provided that melting of the fuse can be implemented based on a Joule integral relationship after a current is greater than a specified threshold.

In an embodiment, still as shown in FIG. 3, the auxiliary fuse module 130 includes a first capacitor C1, a second capacitor C2, a first voltage equalizing resistor R1, and a second voltage equalizing resistor R2, the first capacitor C1 and the second capacitor C2 are connected in series between the positive electrode and the negative electrode of the auxiliary fuse module 130, the first voltage equalizing resistor R1 is connected in parallel to the first capacitor C1, and the second voltage equalizing resistor R2 is connected in parallel to the second capacitor C2.

When both the AC-DC conversion circuit 1 and the AC-DC conversion circuit 2 are normal, energy of the direct current busbar may be used for energy storage through the first capacitor C1 and the second capacitor C2. The first voltage equalizing resistor R1 and the second voltage equalizing resistor R2 may adjust voltages at two ends of the first capacitor C1 and voltages at two ends of the second capacitor C2, so that the voltages at the two ends of the first capacitor C1 and the voltages at the two ends of the second capacitor C2 are dynamically balanced, thereby avoiding damage to the first capacitor C1 and the second capacitor C2 due to a bias voltage.

In an embodiment, the auxiliary fuse module 130 further includes a second fuse group, and the second fuse group includes two fuses: a fuse F31 and a fuse F32. The positive electrode of the auxiliary fuse module 130 is connected to the positive direct current busbar BUS+ through the fuse F31, and the negative electrode of the auxiliary fuse module 130 is connected to the negative direct current busbar BUS- through the fuse F32. The fuse F31, the fuse F32, the fuse F11, and the fuse F12 are fuses of a same specification.

In the foregoing manner, when the positive electrode and the negative electrode of the auxiliary fuse module 130 are short-circuited, output currents of the AC-DC conversion circuit 1 and the AC-DC conversion circuit 2 both flow through the fuse F31 and the fuse F32, so that reliable melting of the fuse F31 and the fuse F32 can be implemented.

In an embodiment, the charging system 100 further includes a bidirectional DC-DC conversion circuit 140 and an energy storage battery 150. A positive electrode of one end of the bidirectional DC-DC conversion circuit 140 is connected to the positive direct current busbar BUS+, and a negative electrode of the end of the bidirectional DC-DC conversion circuit 140 is connected to the negative direct current busbar BUS-; and a positive electrode of the other end of the bidirectional DC-DC conversion circuit 140 is connected to a positive electrode of the energy storage battery 150, and a negative electrode of the other end of the bidirectional DC-DC conversion circuit 140 is connected to a negative electrode of the energy storage battery 150.

In an embodiment, the charging system 100 may further include a third fuse group, and the third fuse group includes two fuses. The bidirectional direct current-direct current conversion circuit 140 is connected to the positive direct current busbar BUS+ and the negative direct current busbar BUS- through the two fuses in the third fuse group. Still as shown in FIG. 3, the positive electrode of the end of the bidirectional DC-DC conversion circuit 140 is connected to the positive direct current busbar BUS+ through a fuse F41, and the negative electrode of the end of the bidirectional DC-DC conversion circuit 140 is connected to the negative direct current busbar BUS- through a fuse F42.

When an input end of the bidirectional DC-DC conversion circuit 140 is short-circuited, the output current I₃ of the auxiliary fuse module 130, the output current I₁ of the AC-DC conversion circuit 1, and the output current I₂ of the AC-DC conversion circuit 2 all flow through the fuse F41 and the fuse F42, so that a total current flowing through the fuse F41 and the fuse F42 is greater than a fuse current of the fuse F41 and the fuse F42, thereby ensuring reliable melting of the fuse F41 and the fuse F42. In this way, the faulty bidirectional DC-DC conversion circuit 140 and the energy storage battery 150 are removed from the charging system 100.

In the foregoing implementation process, the bidirectional DC-DC conversion circuit 140 may be used as a part of the charging system, or may be used as a load. When the charging system 100 is idle, the bidirectional DC-DC conversion circuit 140 charges the corresponding energy storage battery 150 through an alternating current-direct current conversion circuit 110.

In an embodiment, the charging system 100 further includes at least one fourth fuse group. The at least one fourth fuse group is connected to the at least one DC-DC conversion circuit in a one-to-one correspondence, each fourth fuse group includes two fuses, a positive input end of each direct current-direct current conversion circuit 120 is connected to the positive direct current busbar BUS+ through one fuse in a corresponding fourth fuse group, and a negative input end of each direct current-direct current conversion circuit 120 is connected to the negative direct current busbar BUS- through the other fuse in the corresponding fourth fuse group.

Still as shown in FIG. 3, the positive input end of the DC-DC conversion circuit 1 is connected to the positive direct current busbar BUS+ through a fuse F13, and the negative input end of the DC-DC conversion circuit 1 is connected to the negative direct current busbar BUS- through a fuse F14. The positive input end of the DC-DC conversion circuit 2 is connected to the positive direct current busbar BUS+ through a fuse F23, and the negative input end of the DC-DC conversion circuit 2 is connected to the negative direct current busbar BUS- through a fuse F24.

To ensure operation of fuses and normal working of an alternating current-direct current conversion circuit 110 when an input end of a direct current-direct current conversion circuit 120 is short-circuited, it needs to be ensured that an operating Joule-integral of fuses in a fuse group corresponding to the direct current-direct current conversion circuit 120 is less than a pre-arcing Joule integral of fuses in a fuse group corresponding to the alternating current-direct current conversion circuit 110.

In an embodiment, each alternating current-direct current conversion circuit 110 in the charging system 100 further corresponds to a fifth fuse group, and the fifth fuse group includes three fuses. A first input end of a alternating current-direct current conversion circuit 110 is connected to a first fuse in the fifth fuse group, a second input end of the alternating current-direct current conversion circuit 110 is connected to a second fuse in the fifth fuse group, and a third input end of the alternating current-direct current conversion circuit 110 is connected to a third fuse in the fifth fuse group.

Still as shown in FIG. 3, a first input end of the AC-DC conversion circuit 1 is connected to a connection terminal U through a fuse F51, a second input end of the AC-DC conversion circuit 1 is connected to a connection terminal V through a fuse F52, and a third input end of the AC-DC conversion circuit 1 is connected to a connection terminal W through a fuse F53. A first input end of the AC-DC conversion circuit 2 is connected to a connection terminal U through a fuse F54, a second input end of the AC-DC conversion circuit 2 is connected to a connection terminal V through a fuse F55, and a third input end of the AC-DC conversion circuit 2 is connected to a connection terminal W through a fuse F56.

In the foregoing manner, input protection may be performed on the alternating current-direct current conversion circuit 110, to prevent a fault from spreading to a power grid due to a failure of the alternating current-direct current conversion circuit 110.

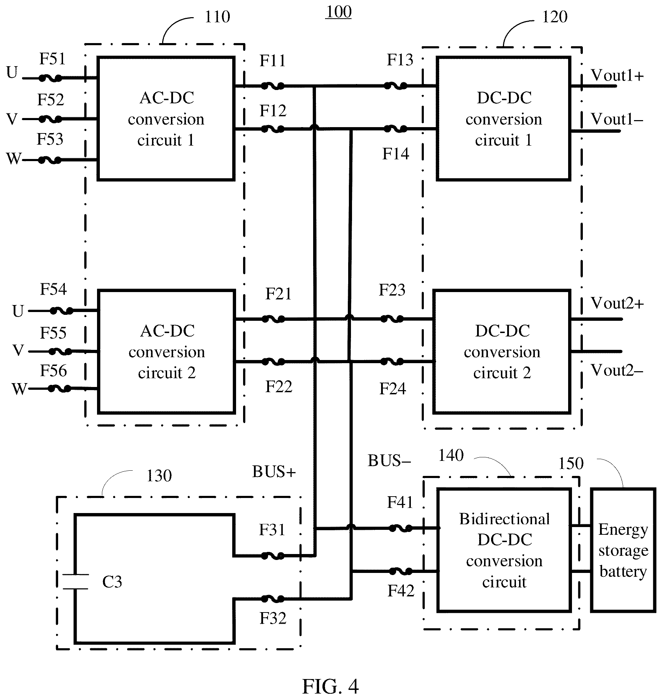

FIG. 4 is a diagram of another structure of a charging system according to an embodiment of this application. In an embodiment, as shown in FIG. 4, an auxiliary fuse module 130 may alternatively select a supercapacitor C3 for energy storage. One end of the supercapacitor C3 is connected to a positive electrode of the auxiliary fuse module 130, and the other end of the supercapacitor C3 is connected to a negative electrode of the auxiliary fuse module 130. On this basis, quantities and structures of alternating current-direct current conversion circuits 110 and direct current-direct current conversion circuits 120 in the charging system 100 may be expanded according to principles in FIG. 3. Details are not described herein again in this embodiment of this application.

In an embodiment, when the charging system 100 includes more alternating current-direct current conversion circuits 110 and/or direct current-direct current conversion circuits 120, a fuse protection principle when an output end of each alternating current-direct current conversion circuit 110 is short-circuited or an input end of each direct current-direct current conversion circuit 120 is short-circuited is similar to that described in FIG. 3. Details are not described herein in this embodiment of this application.

In conclusion, an embodiment of this application provides a charging system 100, applied to the field of energy technologies. The charging system 100 includes at least two alternating current-direct current conversion circuits 110, at least two first fuse groups, at least one direct current-direct current conversion circuit 120, and an auxiliary fuse module 130. Each first fuse group includes two fuses, an input end of each alternating current-direct current conversion circuit 110 is configured to connect to an alternating current power supply, a positive output end of each alternating current-direct current conversion circuit 110 is connected to a positive direct current busbar BUS+ through one fuse in a corresponding first fuse group, and a negative output end of each alternating current-direct current conversion circuit 110 is connected to a negative direct current busbar BUS- through the other fuse in the corresponding first fuse group. A positive input end of the direct current-direct current conversion circuit 120 is connected to the positive direct current busbar BUS+, and a negative input end of the direct current-direct current conversion circuit 120 is connected to the negative direct current busbar BUS-. A positive electrode of the auxiliary fuse module 130 is connected to the positive direct current busbar BUS+, a negative electrode of the auxiliary fuse module 130 is connected to the negative direct current busbar BUS-, the auxiliary fuse module 130 is configured to output an auxiliary fuse current when an output end of the alternating current-direct current conversion circuit 110 is short-circuited, and the auxiliary fuse current is greater than or equal to a short circuit current of the output end of the alternating current-direct current conversion circuit 110. In view of this, an alternating current-direct current conversion circuit whose output end is short-circuited can be removed more reliably when a plurality of alternating current-direct current conversion circuits are connected in parallel to a direct current busbar.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed apparatus may be implemented in other manners. For example, the apparatus embodiments described above are merely examples. For example, a plurality of modules or components may be combined or integrated into another system, or some features may be ignored or not performed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging system, comprising:
at least two alternating current-direct current conversion circuits and at least two first fuse groups, wherein each first fuse group comprises two fuses, an input end of each alternating current-direct current conversion circuit is configured to connect to an alternating current power supply, a positive output end of each alternating current-direct current conversion circuit is connected to a positive direct current busbar through one fuse in a corresponding first fuse group, and a negative output end of each alternating current-direct current conversion circuit is connected to a negative direct current busbar through the other fuse in the corresponding first fuse group;
at least one direct current-direct current conversion circuit, wherein a positive input end of the direct current-direct current conversion circuit is connected to the positive direct current busbar, and a negative input end of the direct current-direct current conversion circuit is connected to the negative direct current busbar; and
an auxiliary fuse module, wherein a positive electrode of the auxiliary fuse module is connected to the positive direct current busbar, a negative electrode of the auxiliary fuse module is connected to the negative direct current busbar, the auxiliary fuse module is configured to output an auxiliary fuse current when an output end of the alternating current-direct current conversion circuit is short-circuited, and the auxiliary fuse current is greater than or equal to a short circuit current of the output end of the alternating current-direct current conversion circuit.

2. The charging system according to claim 1, wherein the auxiliary fuse module comprises a first capacitor, a second capacitor, a first voltage equalizing resistor, and a second voltage equalizing resistor, the first capacitor and the second capacitor are connected in series between the positive electrode of the auxiliary fuse module and the negative electrode of the auxiliary fuse module, the first voltage equalizing resistor is connected in parallel to the first capacitor, and the second voltage equalizing resistor is connected in parallel to the second capacitor.

3. The charging system according to claim 1, wherein the auxiliary fuse module comprises a supercapacitor, one end of the supercapacitor is connected to the positive electrode of the auxiliary fuse module, and the other end of the supercapacitor is connected to the negative electrode of the auxiliary fuse module.

4. The charging system according to any one of claims 1 to 3, wherein the auxiliary fuse module further comprises a second fuse group, and the second fuse group comprises two fuses; and
the positive electrode of the auxiliary fuse module is connected to the positive direct current busbar through one fuse in the second fuse group, and the negative electrode of the auxiliary fuse module is connected to the negative direct current busbar through the other fuse in the second fuse group.

5. The charging system according to claim 4, wherein the second fuse group and the first fuse group are fuse groups of a same specification.

6. The charging system according to any one of claims 1 to 5, wherein the charging system further comprises a bidirectional direct current-direct current conversion circuit and an energy storage battery, and the energy storage battery is connected to the positive direct current busbar and the negative direct current busbar through the bidirectional direct current-direct current conversion circuit.

7. The charging system according to claim 6, wherein the charging system further comprises a third fuse group, the third fuse group comprises two fuses, the bidirectional direct current-direct current conversion circuit is connected to the positive direct current busbar through one fuse in the third fuse group, and the bidirectional direct current-direct current conversion circuit is connected to the negative direct current busbar through the other fuse in the third fuse group.

8. The charging system according to any one of claims 1 to 7, wherein the charging system further comprises at least one fourth fuse group, the at least one fourth fuse group is connected to the at least one direct current-direct current conversion circuit in a one-to-one correspondence, each fourth fuse group comprises two fuses, the positive input end of the direct current-direct current conversion circuit is connected to the positive direct current busbar through one fuse in the fourth fuse group, and the negative input end of the direct current-direct current conversion circuit is connected to the negative direct current busbar through the other fuse in the fourth fuse group.

9. The charging system according to claim 8, wherein an operating Joule-integral value of the fuses in the fourth fuse group is less than a pre-arcing Joule integral value of the fuses in the first fuse group.

10. The charging system according to any one of claims 1 to 9, wherein in a working condition in which a quantity of the alternating current-direct current conversion circuits is greater than or equal to 3, the pre-arcing Joule integral value of the fuses in the first fuse group is greater than a quarter of an operating Joule-integral value of the fuses in the first fuse group.
